# EUROPÄISCHE PATENTANMELDUNG

(11) **EP 1 661 611 A1**
(43) Veröffentlichungstag der Anmeldung: **31.05.2006**
(21) Anmeldenummer: 05025395.4
(22) Anmeldetag: 22.11.2005
(51) Int. Cl.: B01D 29/90

(54) **Reinigungsanlage zum Reinigen von Kühlschmierstoff aus der spanenden Metallbearbeitung**

(30) Priorität: 25.11.2004 DE 102004057075
(71) Anmelder: Bürener Maschinenfabrik GmbH, 33142 Büren (DE)
(72) Erfinder: Ahlke, Heinz, 33142 Büren (DE); Weiser, Stefan, 07546 Gera (DE)
(74) Vertreter: Sparing Röhl Henseler Patentanwälte European Patent Attorneys

(57) **Zusammenfassung**

Die Erfindung betrifft eine Reinigungsanlage für Kühlschmierstoff mit einem Kühlschmierstoffkreislauf, der ein rohrförmiges Gehäuse (10) mit einer Einströmöffnung (11) an einem Ende und einer ersten Abströmöffnung (12) am anderen Ende für durchgeleiteten Kühlschmierstoff sowie einen rohrförmigen Siebeinsatz (15) aufweist, wobei zwischen der Innenwand (16) des Gehäuses (10) und dem Siebeinsatz (15) ein Ringraum (17) besteht und eine zweite Abströmöffnung (19) für gesiebten Kühlschmierstoff vorgesehen ist, wobei die Einströmöffnung (11) seitlich in den Ringraum (17) mündet, der Siebeinsatz (15) an der der ersten Abströmöffnung (12) zugewandten Seite geschlossen und an seiner gegenüberliegenden Seite die zweite Abströmöffnung (19) angeordnet ist, und der zweiten Abströmöffnung (19) eine schnell verschließbare Absperreinrichtung (22) zum zeitweiligen Unterbrechen eines gesiebten Kühlschmierstoffabflusses folgt.

## Beschreibung

Die Erfindung betrifft eine Reinigungsanlage zum Reinigen von Kühlschmierstoff aus der spanenden Metallbearbeitung nach dem Oberbegriff des Anspruchs 1.

Die schmierenden und kühlenden Flüssigkeiten, allgemein als Kühlschmierstoffe bezeichnet, nehmen bei ihrem Einsatz Feststoffrückstände, insbesondere Späne, auf und müssen deshalb vor einem erneuten Einsatz eine Filtereinrichtung durchlaufen. Der Filteraufwand richtet sich nach dem Verwendungszweck der Kühlschmierstoffe, die für eine Außenkühlung als auch für eine Innenkühlung eingesetzt werden. Zur Außenkühlung des Werkzeuges und Wegspülen der Späne sind große Mengen an Kühlschmierstoff erforderlich, wobei ein geringerer Reinheitsgrad von 100 bis 200µm ausreichend ist. Zur Innenkühlung eines Werkzeuges und/oder einer Drehdurchführung einer Werkzeugmaschine sind im allgemeinen geringere Mengen erforderlich, wobei jedoch ein höherer Reinheitsgrad in der Größenordnung von 30 bis 50 µm verlangt wird. Der höhere Reinheitsgrad wird erhalten, wenn der vorgereinigte Kühlschmierstoff einer Nachreinigung unterzogen wird. Dies geschieht bei bekannten Kühlschmierstoff-Reinigungsanlagen z.B. durch Filterpatronen mit Filtereinsätzen, in denen der vorgereinigte Kühlschmierstoff einer entsprechenden Nachreinigung unterzogen wird. Diese Filterpatronen haben den Nachteil, daß die Filtereinsätze verstopfen und entweder ausgetauscht oder durch Rückspülvorgänge ständig gereinigt werden müssen.

Aus der DE 197 25 295 A1 ist eine Reinigungsanlage bekannt, die diese Nachteile dadurch zu überwinden sucht, daß ein Flüssigkeitsfilter vorgesehen ist, der aus einem rohrförmigen Siebkörper besteht, welcher in Längsrichtung und/oder in Querrichtung durchströmt wird, wobei das Mengenverhältnis von Längsströmung zur Querströmung durch den Innendruck und/oder der Strömungsgeschwindigkeit im rohrförmigen Siebkörper und dieser vom Strömungswiderstand in Strömungslängs- und Strömungsquerrichtung bestimmt wird. Eine nahezu wartungsfreie Nachreinigung des Kühlschmierstoffs werde ermöglicht, da aufgrund der hohen Durchflußrate durch das siebförmige Rohr dieses an seiner Mantelinnenfläche ständig durch die Längsströmung des Kühlschmierstoffes gereinigt werde. Je nach Verschmutzung der Kühlschmierstoffe ist diese Selbstreinigung nicht hinreichend, so daß es zu Verstopfungen des Siebkörpers kommt. Die vorbekannte Reinigungsanlage umfaßt deshalb ein Rückspülsystem mit zusätzlicher Flüssigkeitspumpe, um durch eine Gegenströmung eine effektive Reinigung des rohrförmigen Siebkörpers zu erreichen. Das Erfordernis einer Gegenströmung verschlechtert die Wirtschaftlichkeit der Nachreinigung des Kühlschmierstoffes.

Aufgabe der Erfindung ist es daher, eine Reinigungsanlage zum Reinigen von Kühlschmierstoff zu schaffen, die eine wirtschaftliche Nachreinigung des Kühlschmierstoffes erlaubt.

Diese Aufgabe wird durch die Merkmale des Anspruchs 1 gelöst.

Hierdurch wird eine Reinigungsanlage zum Reinigen von Kühlschmierstoff aus der spanenden Metallbearbeitung geschaffen, die als Flüssigkeitsfilter einen Leitungsfilter aufweist, dessen konstruktive Gestaltung eine feste Anlagerung von Verunreinigungen an dem Filtereinsatz verhindert. Ein Rückspülsystem mit zusätzlicher Flüssigkeitspumpe ist deshalb nicht mehr erforderlich. Durch die seitliche Zuführung eines gegebenenfalls vorgereinigten Kühlschmierstoffes in den Ringraum zwischen dem Filtergehäuse und dem Siebeinsatz wird das Kühlmittel in eine Rotationsbewegung versetzt. Aufgrund der dadurch entstehenden Zentrifugalkräfte werden mitgeführte Verunreinigungen in Richtung Gehäuseinnenwand gedrückt. Somit verringert sich der Anteil an Verunreinigungen in der Mitte des Flüssigkeitsfilters, wo sich der Siebeinsatz befindet. Bevorzugt ist deshalb insbesondere eine tangentiale Zuführung des Kühlschmierstoffes.

Die Fließgeschwindigkeit des Kühlschmierstoffes in dem Ringraum läßt sich Einstellen durch Auswahl der Spaltbreite des Ringraums und/oder Auswahl des Drucks einer Pumpe, die Kühlschmierstoff aus einem Sammelbehälter zuführt. Durch einen hohen Druck, der durch die Pumpe erzeugt werden kann, entsteht in einem eng ausbildbaren Ringraum eine hohe Fließgeschwindigkeit des Kühlschmierstoffs im Leitungsfilter. Dadurch kann zum einem die Anlagerung von Verunreinigungen an dem Siebeinsatz erschwert werden. Zum anderen können bereits an dem Siebeinsatz abgelagerte Partikel durch einen schnellen Kühlmittelstrom mitgerissen werden.

Durch ein zeitweiliges schnelles Schließen des Reinstabflusses am Leitungsfilter mittels einer beliebigen Absperreinrichtung wie einem Filter oder Schieber kann ein impulsartiger Druckanstieg im Filter zwischen der Schmutz- und Reinstseite entstehen. Dadurch und durch eine durch das Schließen der Absperreinrichtung nochmals erhöhbare Fließgeschwindigkeit des Kühlschmierstoffes im Leitungsfilter können auch die sich in dem Siebeinsatz sich befindenden Verunreinigungen entfernt werden.

Eine Reinigungsanlage für Kühlschmierstoff mit einem Kühlschmierstoffkreislauf stellt durch den Einsatz des Leitungsfilters sicher, daß der einer Innenkühlung zugeführte Kühlschmierstoff den hierfür erforderlichen Reinheitsgrad aufweist, und zwar unabhängig davon, wie zuverlässig eine vorgeschaltete Reinigungsstufe arbeitet.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
Fig. 1 zeigt anhand eines Kühlmittelplans eine Reinigungsanlage gemäß der Erfindung mit einem als separate Baueinheit ausgeführten Flüssigkeitsfilter,
Fig. 2 zeigt einen Flüssigkeitsfilter in schematischer Darstellung zur Verwendung in der Reinigungsanlage gemäß Fig. 1.

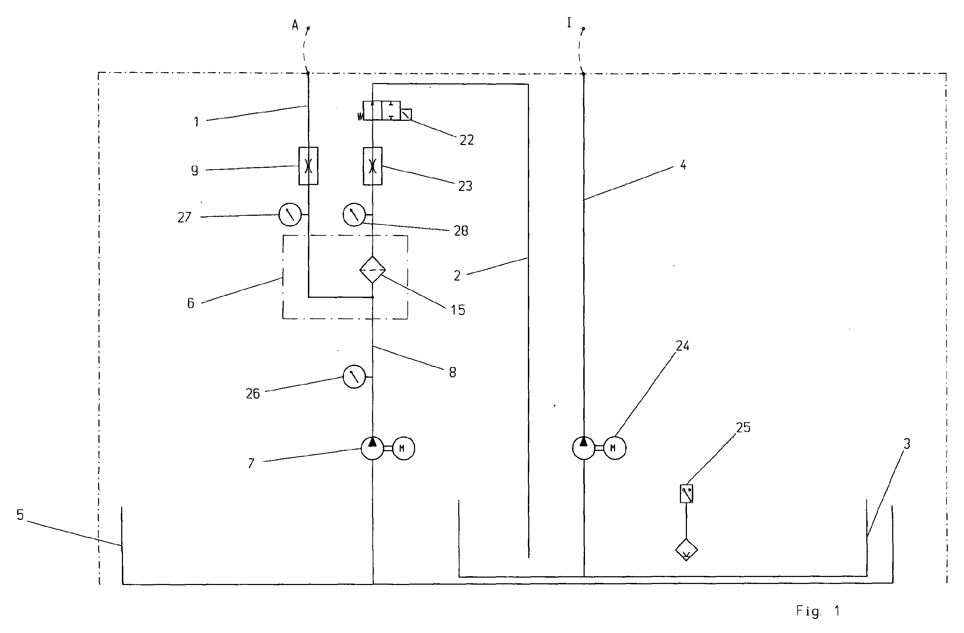

Die in Fig. 1 dargestellte Reinigungsanlage dient zum Reinigen von Kühlschmierstoff aus der spanenden Metallbearbeitung oder von sonstigen Bearbeitungsflüssigkeiten mit Feststoffrückständen.

Der Kühlschmierstoff wird insbesondere bei der spanenden Bearbeitung benötigt. Dazu wird in einer ersten Zuführungsleitung 1 gegebenenfalls vorgereinigter Kühlschmierstoff einer Außenkühlung A in einem Teilstrom zugeführt. Die Vorreinigung kann durch bekannte Filter wie beispielsweise Schwerkraftfilter mit Verbrauchsvlies erfolgen. In einer zweiten Zuführungsleitung 2 wird nachgereinigter, d.h. gesiebter Kühlschmierstoff, einem Reinsttank 3 zugeführt, aus dem über eine Leitung 4 einer Innenkühlung I der nachgereinigte Kühlschmierstoff zugeführt wird. Alternativ kann die Zuführungsleitung 2 die Innenkühlung I auch direkt mit nachgereinigtem Kühlschmierstoff versorgen.

Der gegebenenfalls vorgereinigte Kühlschmierstoff, der in die Zuführungsleitungen 1 und 2 eingeleitet wird, befindet sich in einem Sammeltank oder Reintank 5, der von einem herkömmlichen Vorfilter gespeist werden kann.

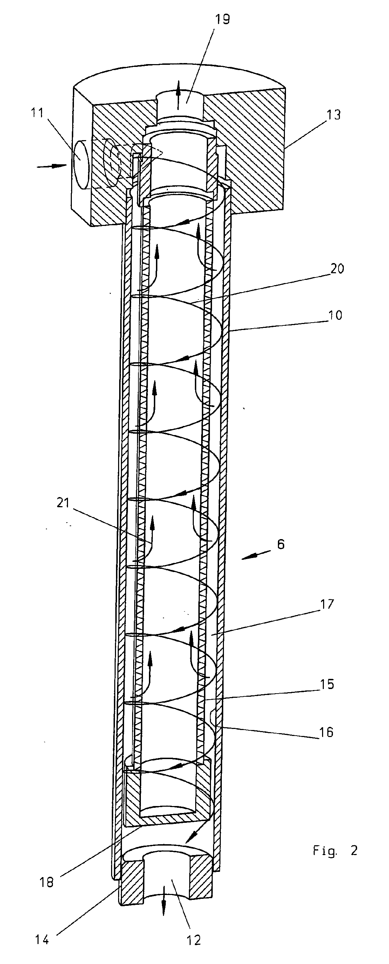

Die Reinigungsanlage weist einen Flüssigkeitsfilter 6 auf, der in Fig. 2 im einzelnen dargestellt ist. Aus dem Reintank 5 wird über eine Flüssigkeitspumpe 7 gegebenenfalls vorgereinigter Kühlschmierstoff durch eine Leitung 8 in den Flüssigkeitsfilter 6 gepumpt. Der Flüssigkeitsfilter 6 ist ein Leitungsfilter, der ein Durchleiten des Kühlschmierstoffes in die Zuführungsleitung 1 erlaubt. In dieser Zuführungsleitung 1 befindet sich vorzugsweise eine festeingestellte oder regelbare Drossel 9. Die Drossel 9 bestimmte eine Durchflußrate an Kühlschmierstoff zur Außenkühlung A und den Druck im Flüssigkeitsfilter 6 aufgrund der Pumpleistung der Flüssigkeitspumpe 7. Mittels der zwischen dem Flüssigkeitsfilter 6 und der Außenkühlung A geschalteten Drossel 9 ist der Volumenstrom des Kühlschmierstoffs zur Außenkühlung auf einen wählbaren Wert beschränkbar. Je stärker die Drossel 9 den Durchfluß hindert, um so höher wird der Druck im Flüssigkeitsfilter 6.

Wie in Fig. 2 dargestellt, umfaßt der Flüssigkeitsfilter 6 ein rohrförmiges Gehäuse 10 mit einer Einströmöffnung 11 an einem Ende und einer ersten Abströmöffnung 12 am anderen Ende für durchgeleiteten Kühlschmierstoff in die Zuführungsleitung 1. Das Gehäuse 10 ist vorzugsweise zylindrisch, und besitzt einen aufschraubbaren Deckel 13 und einen Boden 14 an den jeweiligen Enden.

Das Gehäuse 10 weist einen rohrförmigen Siebeinsatz 15 auf. Zwischen der Innenwand 16 des Gehäuses 10 und dem Siebeinsatz 15 besteht ein Ringraum 17. Die Einströmöffnung 11 mündet seitlich, vorzugsweise tangential in diesen Ringraum 17. Der Siebeinsatz 15 ist an der der ersten Abströmöffnung 12 zugewandten Seite geschlossen, beispielsweise durch einen Boden 18, und besitzt an seiner gegenüberliegenden Seite eine Abströmöffnung für gesiebten Kühlschmierstoff, die eine zweite Abströmöffnung 19 des Flüssigkeitsfilters 6 bildet. Der Siebeinsatz 15 kann in den Deckel 13 montiert sein, so daß durch ein Aufschrauben des Deckels 13 am Gehäuse 10 der Siebeinsatz 15 einsteckbar ist.

Der Durchfluß des gegebenenfalls vorgereinigten Kühlschmierstoffes in Längsrichtung durch den Flüssigkeitsfilter 6 zur Zuführungsleitung 1 ist in Fig. 2 durch die Pfeile 20 veranschaulicht. Der gegebenenfalls vorgereinigte Kühlschmierstoff aus dem Reintank 5 wird mittels der Pumpe 7 in den Flüssigkeitsfilter 6 gefördert. Dort wird er seitlich, insbesondere tangential, in den von dem Ringraum 17 gebildeten Spalt zwischen der Innenwand 16 des Gehäuses 10 und dem Siebeinsatz 15 eingeführt. Durch die damit erzeugte Rotation des Mediums im rohrförmigen Gehäuse 10 werden eventuell mitgeführte Verunreinigungen aufgrund der Zentrifugalkraft in Richtung der Gehäuseinnenwand 16 gedrückt. Anschließend werden sie mit dem Kühlschmierstoff durch die in dem Boden 14 angeordnete erste Abströmöffnung 12 zur Außenkühlung A des Werkzeugs/Werkstücks geleitet.

Bewirkt die Drossel 9 in der Zuführungsleitung 1 der Außenkühlung A einen hohen Druck im Flüssigkeitsfilter 6 aufgrund der Pumpleistung der Flüssigkeitspumpe 7, wird der Kühlschmierstoff außerdem durch den Siebeinsatz 15 gedrückt, wie dies die Pfeile 21 verdeutlichen. Der Kühlschmierstoff wird in Querrichtung durch den Filtereinsatz 15 gedrückt. Dieser gesiebte und damit nachgereinigte Kühlschmierstoff wird durch die zweite Abströmöffnung 19 in einen abgetrennten Reinsttank 3 geleitet. Der zweiten Abströmöffnung 19 folgt eine schnell verschließbare Absperreinrichtung 22 zum zeitweiligen Unterbrechen eines gesiebten Kühlschmierstoffabflusses. Die Absperreinrichtung 22 ist vorzugsweise ein Ventil, insbesondere ein 2/2 Wegeventil.

Über die Drossel 9 ist folglich das Mengenverhältnis von Längs- zu Querströmung einstellbar.

Die an die zweite Abströmöffnung 19 anschließende zweite Zuführungsleitung 2 weist neben der Absperreinrichtung 22 vorzugsweise eine weitere Drossel 23 auf. Durch diese zwischengeschaltete Drossel 23 kann auch der Volumenstrom des gesiebten Kühlschmierstoffs in den Reinsttank 3 beschränkt werden.

Aus dem Reinsttank 3 wird der gesiebte Kühlschmierstoff mit einer Pumpe 24, insbesondere einer Hochdruckpumpe zur Innenkühlung 1 der anschließbaren Werkzeugmaschine gepumpt. Ein bevorzugt vorgesehener Niveauschalter 25 überwacht den Füllstand des Reinsttanks 3. Er gibt ein Signal, wenn der Pegelstand im Reinsttank 3 unter einen gewissen Pegelstand fällt. Somit ist die Pumpe 24 auch im Fall einer Störung vor dem Trockenlaufen geschützt.

Mittels Druckmeßeinrichtungen 26, 27, 28 können Druckabfälle in den Leitungen 8, 1, 2 festgestellt und dadurch Steuerbefehle ausgelöst werden, insbesondere bezüglich des Absperrorgans 22 als auch der Drossel 9, 23 und deren Regelung.

Der Flüssigkeitsfilter 6 ist bei dem beschriebenen Ausführungsbeispiel vertikal angeordnet. Eine liegende Anordnung ist ebenfalls möglich.

Der Siebeinsatz 15 kann als ein bodenseitig verschlossener Spaltfilter ausgebildet sein. Alternativ kann der Siebeinsatz 15 als ein Filtertopf mit in der Form wählbaren Durchtrittsöffnungen ausgebildet sein. Die Siebdurchlässigkeit bestimmt die Spaltweite des Siebeinsatzes 15 und liegt vorzugsweise im Bereich von 30 bis 50 µm.

Die Stärke der Flüssigkeitspumpe 7 als auch die Spaltbreite des Ringraums 17 sind im Hinblick auf eine einstellbare Strömungsgeschwindigkeit wählbar.

## Patentansprüche

1. Reinigungsanlage für Kühlschmierstoff mit einem Kühlschmierstoffkreislauf, der ein rohrförmiges Gehäuse (10) mit einer Einströmöffnung (11) an einem Ende und einer ersten Abströmöffnung (12) am anderen Ende für durchgeleiteten Kühlschmierstoff sowie einen rohrförmigen Siebeinsatz (15) aufweist, wobei zwischen der Innenwand (16) des Gehäuses (10) und dem Siebeinsatz (15) ein Ringraum (17) besteht und eine zweite Abströmöffnung (19) für gesiebten Kühlschmierstoff vorgesehen ist, **dadurch gekennzeichnet, daß** die Einströmöffnung (11) seitlich in den Ringraum (17) mündet, der Siebeinsatz (15) an der der ersten Abströmöffnung (12) zugewandten Seite geschlossen und an seiner gegenüberliegenden Seite die zweite Abströmöffnung (19) angeordnet ist, und der zweiten Abströmöffnung (19) eine schnell verschließbare Absperreinrichtung (22) zum zeitweiligen Unterbrechen eines gesiebten Kühlschmierstoffabflusses folgt.

2. Reinigungsanlage nach Anspruch 1, **dadurch gekennzeichnet, daß** der Siebeinsatz (15) als ein bodenseitig verschlossener Spaltfilter ausgebildet ist.

3. Reinigungsanlage nach Anspruch 1 oder 2, **dadurch gekennzeichnet, daß** der Siebeinsatz (15) als ein Filtertopf mit in der Form wählbaren Durchtrittsöffnungen ausgebildet ist.

4. Reinigungsanlage nach einem der Ansprüche 1 bis 3, **dadurch gekennzeichnet, daß** der Ringraum (17) zwischen Gehäuse (10) und Siebeinsatz (15) spaltförmig ist.

5. Reinigungsanlage nach einem der Ansprüche 1 bis 4, **dadurch gekennzeichnet, daß** die Absperreinrichtung (22) als Ventil ausgebildet ist.

6. Reinigungsanlage nach einem der Ansprüche 1 bis 5, **dadurch gekennzeichnet, daß** die Einströmöffnung (11) für ein tangentiales Einleiten von Kühlschmierstoff angeordnet ist.

7. Reinigungsanlage nach einem der Ansprüche 1 bis 6, **dadurch gekennzeichnet, daß** das Gehäuse (10) und der Siebeinsatz (14) einen in Längs- und Querrichtung durchströmbaren Flüssigkeitsfilter (6) bilden, wobei das Mengenverhältnis von Längs- zu Querströmung über mindestens eine Drossel (9) einstellbar ist.

8. Reinigungsanlage nach einem der Ansprüche 1 bis 7, **dadurch gekennzeichnet, daß** eine Leitung (2) für den Abfluß von gesiebtem Kühlschmierstoff und eine an die erste Abströmöffnung (12) anschließbare Leitung (1) für durchgeleiteten Kühlschmierstoff jeweils eine Drossel (9, 23) zur Steuerung eines Mengenverhältnisses des Abflusses durch die erste und zweite Abströmöffnung (12, 19) aufweisen.

9. Reinigungsanlage nach einem der Ansprüche 1 bis 8, **dadurch gekennzeichnet, daß** die Strömungsgeschwindigkeit in dem Ringraum (17) über eine Flüssigkeitspumpe (7) und/oder eine Spaltbreite des Ringraums (17) einstellbar ist.

10. Reinigungsanlage nach einem der Ansprüche 1 bis 9, **dadurch gekennzeichnet, daß** der Siebeinsatz (15) eine Siebdurchlässigkeit von 30 bis 50 µm aufweist.

11. Reinigungsanlage nach einem der Ansprüche 1 bis 10, **dadurch gekennzeichnet, daß** eine Leitung (2) für gesiebten Kühlschmierstoff in einen Reinsttank (3) führt und von wo aus über eine Pumpe (24) eine Innenkühlung speisbar ist.

12. Reinigungsanlage nach einem der Ansprüche 1 bis 11, **dadurch gekennzeichnet, daß** der durch den Ringraum (17) durchgeleitete Kühlschmierstoff vorgereinigt ist und aus einem Reintank (5) über eine Pumpe (7) der Einströmöffnung (11) zuführbar ist.

13. Reinigungsanlage nach Anspruch 12, **dadurch gekennzeichnet, daß** zur Vorreinigung des Kühlschmierstoffs ein Papierbandfilter vorgesehen ist, der verschmutzten Kühlschmierstoff aufnimmt und diesen feingereinigt dem Reintank (5) zuführt.

14. Flüssigkeitsfilter nach einem der vorstehenden Ansprüche 1 bis 13, **gekennzeichnet durch** den technischen Aufbau, wie in einem oder mehreren Ansprüchen angegeben.
